# FASCICULE DE BREVET EUROPEEN

(11) **EP 2 307 166 B1**
(45) Date de publication et mention de la délivrance du brevet: **12.04.2017**
(21) Numéro de dépôt: 09784449.2
(22) Date de dépôt: 30.06.2009
(51) Int. Cl.: B23K 1/002, B23K 1/00

(54) **PROCEDE DE FIXATION PAR BRASAGE DE DEUX PIECES**
LÖTVERFAHREN ZUM MITEINANDER BEFESTIGEN VON ZWEI WERKSTÜCKEN
BRAZING METHOD FOR FASTENING TWO WORKPIECES TOGETHER

(30) Priorité: 08.08.2008 FR 0804522
(43) Date de publication de la demande: 13.04.2011
(73) Titulaire: Renault s.a.s., 92100 Boulogne-Billancourt (FR)
(72) Inventeur: VERSCHAVE, Christophe, F-91430 Vauhallan (FR); KERBIGUET, Jean Gilles, F-78150 Le Chesnay (FR)
(86) Numéro de dépôt international: PCT/FR2009/051263
(87) Numéro de publication internationale: WO 2010/015761

(56) Documents cités:
- WO-A-2005/118211
- DE-A1- 10 061 309
- DE-A1-102006 021 755
- DE-A1-102006 054 470
- JP-A- H08 267 230

## Description

La présente invention se rapporte à un procédé de fixation par brasage utilisé pour fixer le pavillon d'un véhicule automobile sur le côté de caisse de ce véhicule. Le document JP H08 267230 décrit une procédé de fixation par brasage d'un pavillon sur un côté de caisse de véhicule automobile.

Le pavillon des véhicules automobile est fixé, longitudinalement au véhicule, sur le bord libre du côté de caisse. La fixation peut être mise en oeuvre par soudure. Dans ce cas, on fait fondre la tôle du bord du côté de caisse et la tôle du pavillon par chauffage. La soudure est visible, en particulier, les traces de l'outil de chauffe sont apparentes et doivent être masquées par un élément de finition rapporté.

La fixation peut également être mise en oeuvre par soudo-brasage au laser. Dans ce cas, le bord du pavillon et le bord du côté de caisse sont accolés de manière à former une gorge longitudinale qui présente une section en V. On dépose, dans cette gorge, un cordon de matériau d'apport. On vient fondre le cordon de matériau d'apport au moyen d'un laser. Le matériau d'apport fond et remplie la gorge. En refroidissant, le matériau d'apport permet la fixation du pavillon sur le côté de caisse. Cette technique permet d'obtenir une fixation très esthétique car la tôle du pavillon n'est pas altérée. En revanche, cette technique requiert un investissement lourd du fait de l'utilisation du laser.

Aussi, un problème qui se pose et que vise à résoudre la présente invention, est de proposer un nouveau procédé de fixation par brasage d'un pavillon sur un côté de caisse qui permet, notamment, une fixation esthétique.

Dans le but de résoudre ce problème, la présente invention propose un procédé de fixation par brasage d'un pavillon sur un côté de caisse de véhicule automobile qui comporte une zone de fixation, au moyen d'un matériau d'apport, solidifié qui solidarise ledit pavillon sur ladite zone de fixation. Selon l'invention, le procédé comprend les étapes suivantes :
- on place ledit matériau d'apport sur ladite zone de fixation dudit côté de caisse ;
- on superpose le pavillon sur ladite zone de fixation dudit côté de caisse de manière à ce que ledit matériau d'apport soit disposé entre ladite zone de fixation dudit côté de caisse et une portion dudit pavillon qui est disposée en regard de ladite portion de fixation et qui est distante du bord dudit pavillon ; et
- on chauffe par induction ledit matériau d'apport à travers ledit côté de caisse et/ou ledit pavillon de manière à ce que ledit côté de caisse et/ou ledit pavillon chauffe par conduction ledit matériau d'apport à une température supérieure ou égale à la température de fusion dudit matériau d'apport.

Le brasage par induction est une technique connue. Le matériau d'apport est placé à proximité des bords superposés des deux pièces à solidariser. On chauffe par induction les pièces qui, par conduction, font fondre le matériau d'apport. Le matériau d'apport fondu pénètre, à l'état liquide, par capillarité entre les deux pièces. Après refroidissement, le matériau d'apport redevient solide et les deux pièces sont solidaires l'une de l'autre.

Cette technique ne peut pas être mise en oeuvre sans un accès à l'interface des deux pièces (c'est-à-dire aux deux bords accolés des deux pièces). Cet accès n'est pas toujours possible, en fonction de la géométrie des pièces et de leur disposition. De plus, lorsque les deux pièces présentent des bords accolés qui sont disposés horizontalement, le matériau d'apport fondu ne peut pas bien pénétrer entre les deux pièces et a tendance à couler verticalement, du fait de la gravité. Ainsi, dans le cas d'un pavillon, l'accès à l'interface entre le pavillon et le côté de caisse ne peut se faire que par l'intérieur de la carrosserie du véhicule, ce qui n'est pas pratique. De plus, le matériau d'apport fondu coule vers le plancher de la carrosserie au lieu de s'infiltrer horizontalement dans l'intervalle séparant les deux pièces, empêchant ainsi une mise en oeuvre correcte du procédé de brasage.

Dans le cas du procédé selon l'invention, la fusion du matériau d'apport est mise en oeuvre à travers au moins une des pièces. La zone de fixation est donc invisible et il n'y a pas de nécessité à avoir accès à l'interface entre les deux pièces ; celle-ci peut donc être cachée. Le procédé de l'invention peut être mis en oeuvre pour solidariser deux pièces placées horizontalement ce qui n'était pas le cas dans le procédé de brasure connu.

Le matériau d'apport étant disposé sur une des pièces, les pièces peuvent être manipulées et déplacées avant leur solidarisation. Le chauffage par induction peut ainsi être mis en oeuvre sur un poste de travail différent de celui qui a servi à déposer le matériau d'apport. Le chauffage par induction peut également être décalé dans le temps, sans que cela pose de problème.

La forme et la disposition des zones de fixation ne sont pas limitées selon l'invention. Selon un mode de réalisation, ladite zone de fixation est plane et ladite portion de pavillon disposée en regard de ladite zone de fixation est plane, ce qui permet de superposer facilement les deux pièces l'une sur l'autre ou des les accoler l'une contre l'autre. On obtient ainsi facilement la fusion par conduction du matériau d'apport.

Avantageusement, ladite zone de fixation dudit côté de caisse comporte des moyens de positionnement dudit matériau d'apport. Ces moyens peuvent être par exemple, des plots qui délimitent une zone dans laquelle est disposé le matériau d'apport. Selon un mode de réalisation, ces moyens de positionnement comportent au moins un creux, ménagé dans ladite zone de fixation dudit côté de caisse et qui est apte à recevoir ledit matériau d'apport. Les moyens de positionnement peuvent également comporter une pluralité de creux ou évidements, tous semblables ou non et répartis sur une ligne ou une surface.

Selon un mode de réalisation, les moyens de positionnement comportent une pluralité de creux allongés, alignés selon leur longueur.

Avantageusement, le matériau d'apport est solide ou pâteux, ce qui permet de le positionner facilement.

Le matériau d'apport peut se présenter sous la forme d'une bande, d'une plaque, d'un boudin, d'une pastille ou d'un plot. Selon un mode de réalisation, le matériau d'apport se présente sous la forme d'un tronçon ou lingot qui présente une section transversale sensiblement rectangulaire.

Le pavillon peut présenter un bord libre qui est replié de manière à former deux épaisseurs. Ce bord rigidifie la pièce et peut rendre sa manipulation plus aisée.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue en coupe transversale d'un pavillon et d'un côté de caisse en cours de fixation selon le procédé de l'invention ;
- la Figure 2 représente le pavillon et le côté de caisse de la figure 1 après fusion et solidification du matériau d'apport ; et
- la Figure 3 représente une vue de dessus d'un exemple de moyens de positionnement du matériau d'apport.

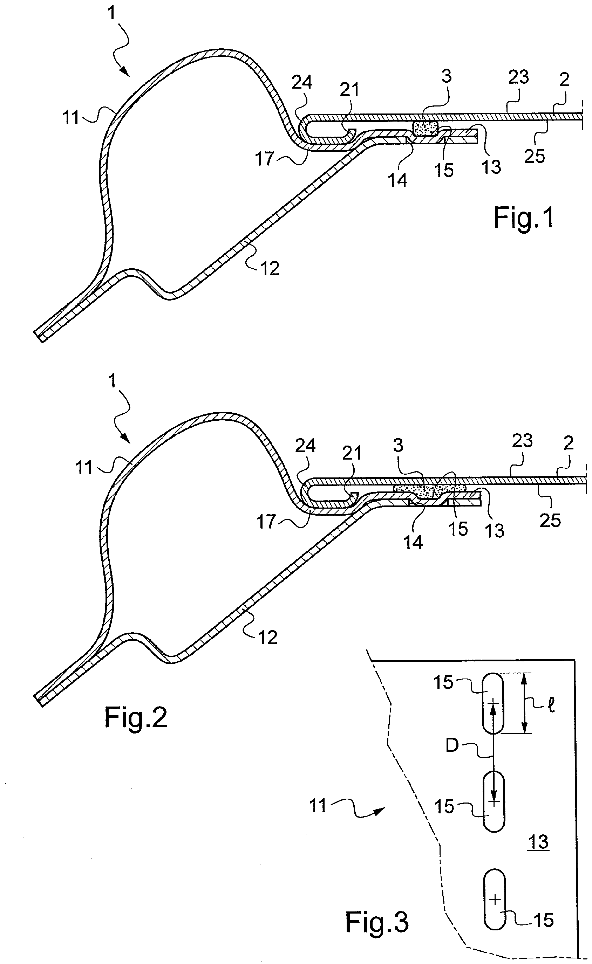

La Figure 1 illustre un mode de réalisation particulier de l'invention. Le côté de caisse 1 comporte une paroi externe 11 et une doublure interne 12. La paroi externe 11 et la doublure 12 forment un corps creux. Le côté de caisse 1 présente une zone de fixation 13 qui est sensiblement plane et qui est formée par soudure de la paroi externe 11 et de la doublure 12 l'une sur l'autre. La doublure 12 présente une ouverture 14, disposée dans la zone de fixation 13. La paroi externe 11 est emboutie dans l'ouverture 14 précitée ce qui permet de réaliser, à la fois un creux, ou évidement, 15 et une zone de fixation 13 qui présente une épaisseur réduite. Un renfoncement 17, parallèle à la zone de fixation 13 est formé par la paroi externe 11 du côté de caisse 1, sur toute la longueur du côté de caisse 1.

La figure 1 ne représente qu'un seul creux 15 mais il est bien évident que la zone de fixation 13 présente une pluralité de creux 15, comme représenté sur la figure 3.

Le pavillon 2 est une tôle relativement plane qui comporte de chaque côté, un bord longitudinal 21 et présente une face externe 23, orientée vers l'extérieur du véhicule, lorsque le pavillon 2 est monté sur un véhicule, et une face interne 25, opposée à la face externe 23 précitée. Le bord longitudinal 21 est replié vers la face interne 25, par exemple, à la molette. On obtient donc, de chaque côté longitudinal du pavillon 2, une bordure 24 à double épaisseur. Cette bordure double épaisseur 24 permet de rigidifier le pavillon 2 et d'en faciliter la manipulation, le bord n'étant plus tranchant.

Le matériau d'apport est solide et se présente sous la forme d'un tronçon ou lingot 3, de préférence parallélépipédique, dont la section est rectangulaire et présente des coins arrondis. Un tel tronçon 3 ou pastille peut être obtenu par extrusion ou extrudage, suivi éventuellement d'un laminage ou bien par frappe à froid. Les dimensions du creux 15 sont adaptées à la taille du tronçon de matériau d'apport 3. En fondant, le matériau d'apport doit remplir le creux 15 et se répandre entre la zone de fixation 13 et la portion du pavillon 2, située en regard de cette zone de fixation 13 (cette portion du pavillon constitue donc aussi une zone de fixation), autour du creux 15. Après refroidissement, le matériau d'apport solidifié assure la fixation.

Le matériau d'apport peut être, par exemple, un alliage de zinc et d'étain ou un alliage de zinc et d'aluminium. Avantageusement, la température de fusion du matériau d'apport est inférieure à 450°C de manière, dans le cas de l'utilisation du procédé de l'invention, dans le domaine de l'automobile, à ne pas détériorer le revêtement, obtenu par galvanisation, qui recouvre les pièces de carrosserie.

Un exemple de mise en oeuvre du précédé de l'invention va maintenant être décrit en référence aux figures 1 et 2.

Le matériau d'apport 3 est disposé, sous forme solide, dans le creux 15, comme représenté sur la figure 1. On dispose ensuite la bordure double épaisseur 24 dans le renfoncement 17. La face interne 25 du pavillon 2 se place alors sur le matériau d'apport 3. Cette face interne 25 est plane au niveau de la portion qui recouvre la zone de fixation 13.

Lorsque les deux pièces 1 et 2 et le matériau d'apport 3 sont disposés comme représenté sur la figure 1, on utilise un inducteur que l'on place, par exemple, du côté de la face externe 23 du pavillon 2. Par induction, on crée des courants induits dans la tôle du pavillon 2. Ces courants échauffent, par effet Joule, la tôle du pavillon 2 et la chaleur se transmet, par conduction, au tronçon 3 de matériau d'apport. On obtient ainsi la fusion du matériau d'apport, à travers l'épaisseur du pavillon 2. Le matériau d'apport fond, remplit le creux 15 et déborde de ce dernier pour se répandre entre la face interne 25 du pavillon 2 et la zone de fixation 13 du côté de caisse 2.

Après refroidissement, le matériau d'apport se solidifie et réalise la solidarisation des deux pièces.

Le procédé de l'invention permet l'utilisation d'un seul inducteur. L'accès par la face externe 25 du pavillon est particulièrement aisé et ne nécessite aucune modification ni du côté de caisse 1, ni du pavillon 2.

La figure 2 représente le pavillon fixé sur le côté de caisse 1. Le tronçon 3 de matériau d'apport ayant été liquéfié par induction, le matériau d'apport liquide s'est répandu entre la zone de fixation 13 et la face interne 25 du pavillon 2, autour du creux 15. Ce matériau d'apport solidifié permet d'assurer la fixation des deux pièces comme dans n'importe quelle fixation par brasage. La fixation est totalement invisible car le matériau d'apport qui assure la fixation est caché entre la face interne 25 du pavillon 2 et la zone de fixation 13 du côté de caisse 1. La résistance à la corrosion d'une telle fixation est donc excellente.

La face externe 25 du pavillon est intacte et ne nécessite pas l'ajout d'un élément décoratif. Il est juste possible d'ajouter un cordon de mastic d'étanchéité, le long de la ligne de fixation au niveau du bord du renfoncement 17, à la jonction de la bordure double épaisseur 24 et de la paroi de bord du renfoncement 17.

Le procédé de l'invention permet également de simplifier le profil du pavillon 2 par rapport à un pavillon qui doit former une gorge avec le côté de caisse dans le cas d'un soudo-brasage laser. Les manipulations du pavillon 2 sont également plus aisées puisque celui-ci repose de chaque côté, selon sa longueur, sur la zone de fixation 13 de chaque côté de caisse 1. Il est ainsi possible de faire glisser le pavillon 2 sur les zones de fixation 13 des côtés de caisse 1, en vue de leur assemblage. Il n'y a plus non plus, de problème de maintien en position du pavillon 2 pendant la mise en oeuvre du procédé de fixation puisque le pavillon 2 est soutenu, selon sa longueur, de chaque côté, par la zone de fixation 13 d'un côté de caisse 1.

Le matériau d'apport peut être disposé sur le côté de caisse 1 au niveau d'un premier poste de travail. La carrosserie peut ensuite être déplacée sur un second poste de travail où l'on place le pavillon 2. Cet ensemble peut lui-même être déplacé sans problème sur un troisième poste de travail où l'on réalise la fusion du matériau d'apport à l'aide d'un ou de plusieurs inducteurs. Le procédé de l'invention peut ainsi être mis en oeuvre sur plusieurs postes de travail et ses différentes étapes peuvent être mises en oeuvre sans conditions de limite de temps.

Les moyens de positionnement représentés sur la figure 3 sont formés d'une pluralité de creux oblongs 15 qui sont disposés selon une ligne (la fixation du pavillon 2 sur le côté de caisse 1 est réalisée selon une ligne droite), alignés selon leur longueur. Ces creux 15 peuvent comporter un bord à leurs deux extrémités (les extrémités étant considérées selon la longueur du creux) ou non (dans ce cas, le matériau d'apport fondu se répand plus facilement). Ces creux 15 peuvent être obtenus par emboutissage. Selon la fixation désirée, les creux 15 peuvent être disposés selon une ligne courbe ou brisée, éventuellement fermée.

Selon un mode de réalisation, les creux 15 peuvent présenter, par exemple, une longueur I de 30 à 40 mm. La distance D séparant les centres de deux creux 15 (les creux 15 sont, par exemple, tous alignés selon leur longueur) est de l'ordre de 80mm. On obtient ainsi une fixation d'une résistance en traction cisaillement de l'ordre de 300 daN, ce qui est supérieur à une fixation par points de soudure équivalents. Les dimensions du tronçon 3 de matériau d'apport sont adaptées en fonction des dimensions des creux 15, lesquelles dépendent de la résistance de fixation désirée. La profondeur des creux 15 est par exemple, sensiblement égale à la moitié de l'épaisseur des tronçons 3 de matériau d'apport placés dans les creux 15.

Selon un autre mode de réalisation des moyens de positionnement, ces derniers sont constitués par une rainure qui s'étend longitudinalement sur le côté de caisse 1 et/ou sur la zone de fixation du pavillon 2. Une telle rainure est particulièrement adaptée lorsque le matériau d'apport est, par exemple, sous forme de pâte. On peut alors extruder un boudin de matériau d'apport dans la rainure ou « tartiner » le matériau d'apport dans la rainure.

D'une façon générale, quel que soit le mode de réalisation des moyens de positionnement du matériau d'apport, ceux-ci doivent être avantageusement positionnés de façon éloignée par rapport au bord du pavillon et par rapport à la jonction entre le pavillon et le côté de caisse. Un tel positionnement permet notamment de laisser libre la fonte du matériau d'apport sur un espace suffisamment important, tout en assurant une liaison sûre du pavillon sur le côté de caisse.

## Revendications

1. Procédé de fixation par brasage d'un pavillon (2) sur un côté de caisse de véhicule automobile qui comporte une zone de fixation (13), au moyen d'un matériau d'apport (3), solidifié qui solidarise ledit pavillon (2) sur ladite zone de fixation (13), **caractérisé en ce qu**'il comprend les étapes suivantes :
- on place ledit matériau d'apport (3) sur ladite zone de fixation (13) dudit côté de caisse (1) ;
- on superpose le pavillon (2) sur ladite zone de fixation (13) dudit côté de caisse (1) de manière à ce que ledit matériau d'apport (3) soit disposé entre ladite zone de fixation (13) dudit côté de caisse (1) et une portion dudit pavillon (2) qui est disposée en regard de ladite portion de fixation (13) et qui est distante du bord (21) dudit pavillon ; et
- on chauffe par induction ledit matériau d'apport (3) à travers ledit côté de caisse et/ou ledit pavillon (2) de manière à ce que ledit côté de caisse (1) et/ou ledit pavillon (2) chauffe par conduction ledit matériau d'apport (3) à une température supérieure ou égale à la température de fusion dudit matériau d'apport (3).

2. Procédé de fixation selon la revendication 1, **caractérisé en ce que** ladite zone de fixation (13 ; 25) est plane **et en ce que** ladite portion de pavillon disposée en regard de ladite zone de fixation (13) est plane.

3. Procédé selon l'une des revendications 1 ou 2, **caractérisé en ce que** ladite zone de fixation (13) dudit côté de caisse (1) comporte des moyens de positionnement (15) dudit matériau d'apport (3).

4. Procédé selon la revendication 3, **caractérisé en ce que** lesdits moyens de positionnement comportent au moins un creux (15), ménagé dans ladite zone de fixation (15) dudit côté de caisse (1) et qui est apte à recevoir ledit matériau d'apport (3).

5. Procédé selon la revendication 4, **caractérisé en ce que** lesdits moyens de positionnement comportent une pluralité de creux (15), allongés, alignés selon leur longueur.

6. Procédé selon l'une quelconque des revendications 1 à 5, **caractérisé en ce que** ledit matériau d'apport (3) est solide ou pâteux.

7. Procédé selon la revendication 6, **caractérisé en ce que** ledit matériau d'apport se présente sous la forme d'un tronçon (3) qui présente une section transversale sensiblement rectangulaire.

8. Procédé selon l'une quelconque des revendications précédentes, **caractérisé en ce que** ledit pavillon (2) présente un bord libre (21) qui est replié de manière à former deux épaisseurs.

9. Procédé **selon l'une quelconque des revendications précédentes, caractérisé en ce que** ladite zone de fixation (13) et ladite portion de pavillon (2) disposée en regard sont placées horizontalement.

## Patentansprüche

1. Verfahren zur Befestigung eines Dachhimmels (2) auf einer Seite einer Kraftfahrzeugkarosserie, umfassend eine Befestigungszone (13), mit Hilfe eines verfestigten Zusatzmaterials (3), das den Dachhimmel (2) auf der Befestigungszone (13) befestigt, **dadurch gekennzeichnet, dass** es die folgenden Schritte umfasst:
- Anordnen des Zusatzmaterials (3) auf der Befestigungszone (13) der Karosserieseite (1);
- Auflegen des Dachhimmels (2) auf die Befestigungszone (13) der Karosserieseite (1), so dass das Zusatzmaterial (3) zwischen der Befestigungszone (13) der Karosserieseite (1) und einem Abschnitt des Dachhimmels (2), der gegenüber dem Befestigungsabschnitt (13) angeordnet und vom Rand (21) des Dachhimmels entfernt ist, angeordnet ist; und
- Erhitzen des Zusatzmaterials (3) durch Induktion über die Karosserieseite und/oder den Dachhimmel (2), so dass die Karosserieseite (1) und/oder der Dachhimmel (2) das Zusatzmaterial (3) durch Konduktion auf eine Temperatur größer oder gleich der Schmelztemperatur des Zusatzmaterials (3) erhitzt.

2. Befestigungsverfahren nach Anspruch 1, **dadurch gekennzeichnet, dass** die Befestigungszone (13; 25) eben ist, und dass der Dachhimmelabschnitt, der gegenüber der Befestigungszone (13) angeordnet ist, eben ist.

3. Verfahren nach einem der Ansprüche 1 oder 2, **dadurch gekennzeichnet, dass** die Befestigungszone (13) der Karosserieseite (1) Mittel (15) zur Positionierung des Zusatzmaterials (3) umfasst.

4. Verfahren nach Anspruch 3, **dadurch gekennzeichnet, dass** die Positionierungsmittel mindestens einen Hohlraum (15) umfassen, der in der Befestigungszone (15) der Karosserieseite (1) ausgenommen und geeignet ist, das Zusatzmaterial (3) auf zunehmen .

5. Verfahren nach Anspruch 4, **dadurch gekennzeichnet, dass** die Positionierungsmittel eine Vielzahl von länglichen, entlang ihrer Länge ausgerichteten Hohlräumen (15) umfassen.

6. Verfahren nach einem der Ansprüche 1 bis 5, **dadurch gekennzeichnet, dass** das Zusatzmaterial (3) fest oder pastenförmig ist.

7. Verfahren nach Anspruch 6, **dadurch gekennzeichnet, dass** das Zusatzmaterial in Form eines Abschnitts (3) vorhanden ist, der einen im Wesentlichen rechteckigen Querschnitt aufweist.

8. Verfahren nach einem der vorhergehenden Ansprüche, **dadurch gekennzeichnet, dass** der Dachhimmel (2) einen freien Rand (21) aufwiest, der umgelegt ist, um zwei Dicken zu bilden.

9. Verfahren nach einem der vorhergehenden Ansprüche, **dadurch gekennzeichnet, dass** die Befestigungszone (13) und der Dachhimmelabschnitt (2), der gegenüber angeordnet ist, horizontal angeordnet sind.

## Claims

1. Method for attaching, by brazing, a roof (2) to a side of a motor vehicle body shell which comprises an attachment zone (13), using a solidified filler material (3) that secures said roof (2) to said attachment zone (13), **characterized in that** it comprises the following steps:
- placing said filler material (3) on said attachment zone (13) of said body shell side (1);
- superposing the roof (2) on said attachment zone (13) of said body shell side (1) such that said filler material (3) is arranged between said attachment zone (13) of said body shell side (1) and a portion of said roof (2) that is arranged facing said attachment portion (13) and is remote from the edge (21) of said roof; and
- induction-heating said filler material (3) through said body shell side and/or said roof (2) such that said body shell side (1) and/or said roof (2) heats, by conduction, said filler material (3) to a temperature greater than or equal to the melting point of said filler material (3).

2. Attachment method according to Claim 1, **characterized in that** said attachment zone (13; 25) is planar **and in that** said roof portion arranged facing said attachment zone (13) is planar.

3. Attachment method according to either of Claims 1 and 2, **characterized in that** said attachment zone (13) of said body shell side (1) comprises means (15) for positioning said filler material (3).

4. Method according to Claim 3, **characterized in that** said positioning means comprise at least one hollow (15) that is created in said attachment zone (15) of said body shell side (1) and is able to receive said filler material (3).

5. Method according to Claim 4, **characterized in that** said positioning means comprise a plurality of hollows (15) that are elongate and are aligned along their length.

6. Method according to any one of Claims 1 to 5, **characterized in that** said filler material (3) is solid or pasty.

7. Method according to Claim 6, **characterized in that** said filler material takes the form of a length (3) having an essentially rectangular cross section.

8. Method according to any one of the preceding claims, **characterized in that** said roof (2) has a free edge (21) which is folded back so as to form two thicknesses.

9. Method **according to any one of the preceding claims, characterized in that** said attachment zone (13) and said portion of the roof (2) arranged opposite are placed horizontally.
